# EUROPÄISCHE PATENTSCHRIFT

(11) **EP 0 654 721 B1**
(45) Veröffentlichungstag und Bekanntmachung des Hinweises auf die Patenterteilung: **22.04.1998**
(21) Anmeldenummer: 94810712.3
(22) Anmeldetag: 03.12.1991
(51) Int. Cl.: G05B 19/418

(54) **Automatische Fabrikationsanlage**
Automatic manufacturing system
Système de fabrication automatique

(30) Priorität: 18.12.1990 CH 4002/90; 21.11.1991 CH 3409/91
(43) Veröffentlichungstag der Anmeldung: 24.05.1995
(62) Teilanmeldung aus: 91810937.2
(73) Patentinhaber: Erowa AG, CH-5734 Reinach (CH)
(72) Erfinder: Obrist, Basil, CH-5728 Gontenschwil (CH)
(74) Vertreter: Rottmann, Maximilian R.

(56) Entgegenhaltungen:
- EP-A- 0 364 138
- DE-A- 3 720 157

## Beschreibung

Die vorliegende Erfindung betrifft eine automatische Fertigungsanlage nach dem Oberbegriff des Patentanspruchs 1.

Derartige Fertigungsanlagen sind mit allen für solche Anlagen typischen Komponenten an sich bekannt, beispielsweise aus den Dokumenten EP-A-0 364 138 und DE-A-37 20 157, in denen auch verschiedene Lösungen zur Steuerung des Produktionsablaufs angegeben sind.

In der Fertigungsanlage nach dem Dukument EP-A-0 364 138 ist zur Steuerung des Produktionsablaufs ein Informationsflussystem mit mehreren, hierarchisch strukturierten Datennetzen vorgesehen. Diese Datennetze dienen dem Austausch von Programmdaten zwischen einem Zentralrechner und den Steuereinheiten der Bearbeitungseinrichtungen und den Steuereinheiten des Materialflusssystems. Ein derartiges Informationsflussystem, bei dem sämtliche Steuerprogramme in einem Zentralrechner verwaltet werden, hat verschiedene Nachteile. Erstens ist die Einstellung von Bearbeitungsprogrammen an einem Zentralrechner als Vorbereitung für die automatische Fertigung recht kompliziert, insbesondere wenn es sich um die Fertigung von vielen verschiedenen Werkstücken in kleinen Losgrössen handelt. Zweitens erfordert jegliche Störung im Produktionsablauf eine Anpassung oder Änderung des Steuerprogramms am Zentralrechner. Solche Änderungen sind jedoch immer mit einem gewissen Zeitaufwand verbunden, was jeweils zu einem mehr oder weniger ausgedehnten Produktionsunterbruch führen kann.

Eine in dieser Beziehung verbesserte Fabrikationsanlage zeigt das Dokument DE-A-37 20 157. Bei der hier beschriebenen Lösung dient der Zentralrechner lediglich zur Steuerung derjenigen Prozesse, welche für den Betrieb der automatischen Fertigungsanlage erforderlich sind. Insbesondere liefert der Zentralrechner keine Bearbeitungsprogramme und keine Anweisungen über die Bearbeitungsreihenfolge. Vielmehr ist jedem zu bearbeitenden Werkstück ein Datenspeicher fest zugeordnet, welcher unter anderem das jeweilige Bearbeitungsprogramm enthält. Dieses wird bei der Übergabe des Werkstücks an eine Fertigungsstation in deren Steuereinrichtung eingelesen. Der Nachteil eines solchen Informationsflussystems besteht darin, dass für den genannten Zweck ziemlich umfangreiche Datenspeicher an jedem Werkstück bzw. an jeder ein Werkstück tragender Palette nötig sind. Um auf diese Weise einen reibungslosen Betrieb zu ermöglichen, ist es im weiteren praktisch unumgänglich, dass alle Fertigungsstationen einer Fertigungsanlage mit einem einheitlichen Betriebssystem arbeiten, da eine jeweilige Übersetzung der umfangreichen Datenprotokolle zu umständlich wäre.

Es ist die Aufgabe der Erfindung, im Zusammenhang mit der Überwachung und Steuerung des Produktionsablaufs einer derartigen Fertigungsanlage ein leistungsfähiges System für den Informationsfluss zwischen den verschiedenen Anlageeinheiten und den Werkstücken bzw. Werkzeugen zu schaffen, welches in verhältnismässig einfacher Weise eine flexible, insbesondere auftragsbezogene Fertigung mit vielen verschiedenen Werkstücken in kleinen Losgrössen ermöglicht. Auch soll ein verbessertes Identifikationssystem geschaffen werden. Ferner soll das Informationssystem geeignet sein, auf dem Wege der Identifikation auch andere, z.B. die Fertigung steuernde Informationen zu übertragen.

Gemäss der Erfindung wird diese Aufgabe durch eine Fertigungsanlage gelöst, die die im Kennzeichen des Patentanspruchs 1 angegebenen Merkmale aufweist.

Mit den erfindungsgemässen Massnahmen lässt sich der Datenverbund im gesamten Informationsnetz der Fertigungsanlage lückenlos schliessen.

Eine praktische Lösung ergibt sich z.B. dadurch, dass die Werkstücke und die Werkzeuge für den Einsatz in den Bearbeitungseinrichtungen und am Messplatz einzeln oder gruppenweise auf einheitlichen Paletten montiert sind, welche in die Bearbeitungseinrichtungen positionsgerecht einspannbar sind und auf welchen die Werkstücke auf ihrem Weg durch die Fertigungsanlage bis zur vollständigen Bearbeitung verbleiben, dass die Paletten der Werkstücke und diejenigen der Werkzeuge mit elektronischen Datenspeichern versehen sind, in denen Daten zum Identifizieren der Werkstücke bzw. Werkzeuge und Daten zum Steuern des automatischen Fertigungsablaufs speicherbar sind, dass die Handhabungsgeräte und der Messplatz mit zum Ablesen der gespeicherten Daten geeigneten Datenverarbeitungsgeräten ausgerüstet sind, und dass die Datenverarbeitungsgeräte mit den jeweils zugeordneten Steuereinheiten der Bearbeitungseinrichtungen kommunikativ verbunden sind.

Eine bevorzugte Lösung bildet eine automatische Fertigungsanlage mit den Merkmalen des Anspruchs 2.

Der Einsatz von Werkstück- bzw. Werkzeugpaletten, welche einheitliche mechanische Positionierungshilfen aufweisen, bildet eine günstige Voraussetzung für die Anwendung des erfindungsgemässen Identifikationssystems. Dabei kann es sich insbesondere bei den Werkstückpaletten um solche für einzelne Werkstücke oder um solche für eine Gruppe von gleichartigen Werkstücken handeln.

Im Gegensatz zu bisherigen Identifikationssystemen, welche inbezug auf den Standort der Werkstücke und Werkzeuge mit Platzkodierung arbeiten, sind beim erfindungsgemässen Identifikationssystem die Werkstücke und Werkzeuge selbst eindeutig identifizierbar. Dieser Umstand erhöht nicht nur die Sicherheit gegen Verwechslungen bei der gegenseitigen Zuordnung der Daten und der betreffenden Werkstücke bzw. Werkzeuge, sondern ermöglicht auch eine ungeordnete Ablage der Werkstücke und Werkzeuge in den betreffenden Magazinen.

Die eindeutige Identifizierung der Komponenten (Werkstücke und/oder Werkzeuge) bildet die Grundlage dafür, dass den einzelnen Komponenten zusätzliche Informationen, mitgegeben werden können, insbesondere Zieldaten für den Transport des Materials und Daten für den Abruf von Programmen für die Bearbeitung des Materials. Werkstück- bzw. Werkzeugpaletten, welche entsprechende Daten mit sich führen und diese bei Bedarf der Steuerung übermitteln können, ermöglichen erst ein vollautomatisches Arbeiten einer Fertigungsanlage mit mehreren, im Verbund betriebenen Fertigungsstationen.

Von besonderem Vorteil ist dabei, dass es nicht erforderlich ist, in den Datenspeichern der Werkstückpaletten die Bearbeitungsdaten in Form eines mehr oder weniger vollständigen Steuer- oder Bearbeitungsprogramms für die in Anspruch genommenen Bearbeitungseinrichtungen abzuspeichern. Es müssen lediglich Daten für die Identifizierung der Bearbeitungsprogramme vorhanden sein, um die jeweils benötigten, in der Steuereinheit gespeicherten Bearbeitungsprogramme abzurufen, sobald eine Palette einer Bearbeitungseinrichtung zugeführt wird. Das Speichervolumen der Datenspeicher kann dementsprechend kleiner sein.

Eine bevorzugte Ausführungsform der erfindungsgemässen Fertigungsanlage besteht überdies darin, dass die Fertigungsstationen, die Lagereinrichtung, die Transportfahrzeuge und die Umladestation einheitliche Aufnahmeplätze für die Palettenmagazine aufweisen, wobei an diesen Aufnahmeplätzen je ein Datenverarbeitungsgerät mit einem Lesekopf zum Ablesen der in den Datenspeichern der Palettenmagazine gespeicherten Daten ausgerüstet sind. Zu diesen Daten gehört insbesondere ein Fahrplan für das Palettenmagazin mit Angaben der nacheinander anzusteuernden Fertigungsstationen.

Sobald ein Palettenmagazin der Transporteinrichtung übergeben wird, kann aus dem Datenspeicher dieses Palettenmagazins das nächste Transportziel abgelesen werden. Diese Information wird nun an die Steuermittel der Transporteinrichtung weitergeleitet, welche ein mit dem Palettenmagazin beladenes Fahrzeug zu dem angegebenen Ziel, z.B. zu einer Fertigungsstation, steuert. Da die Transporteinrichtung stets über das nächste Fahrziel informiert wird, ist es nicht mehr notwendig, den Transportsteuermitteln ganze Transportprogramme einzugeben. Dadurch wird die Steuerung des Materialflusses wesentlich einfacher und flexibler.

Das erfindungsgemässe Informationsflusssystem ermöglicht es ferner auf einfache Weise, Massnahmen für eine Änderung des Fahrplans zu treffen, für den Fall, dass beispielsweise eine bestimmte Zielstation besetzt ist und deshalb nicht angefahren werden kann. Solche Massnahmen können sich auf einen Datenaustausch innerhalb des internen Datennetzes beschränken und erfordern keine Programmänderung am Prozessleitrechner. Ein Palettenmagazin, welches sein Ziel nicht fahrplanmässig erreichen kann, lässt sich in die Lagereinrichtung umleiten, von wo es zu einem späteren Zeitpunkt, z.B. auf ein Signal, welches die Freigabe der vorher besetzten Fertigungsstation ankündigt, wieder abgerufen werden kann.

Vorzugsweise sind Datenspeicher vorgesehen, welche es ermöglichen, die gespeicherten Daten während des Fabrikationsvorganges zu verändern, also beispielsweise die Daten eines Werkstücks jeweils dem aktuellen Stand der Bearbeitung anzupassen. Zu diesem Zweck kann jedes Datenverarbeitungsgerät ausser einem Lesekopf, einen Schreibkopf und eine den Lesezyklus und den Schreibzyklus steuernde Steuer- und Auswerteeinrichtung aufweisen.

Voraussetzung für einen störungsfreien Betrieb ist die Sicherheit der Datenübertragung. Mit Rücksicht auf den oft rauhen Betrieb im Bereich von Bearbeitungseinrichtungen mit deren Störeinflüssen von Öl, Spänen und Kühlmitteln ist von Vorteil, für die Datenübertragung ein System mit berührungsfreier Datenübertragung vorzusehen, wozu sich ein drahtloses Trägerfrequenzsystem besonders gut eignet.

Hinsichtlich der Energieversorgung der Datenspeicher ergibt sich eine vorteilhafte Lösung dadurch, dass Datenspeicher mit energiefreier Speicherung eingesetzt und Einrichtungen vorgesehen sind, mit denen die Energie, welche die Datenspeicher für die Datenübertragung benötigen, vom Datenverarbeitungsgerät auf den jeweils angesteuerten Datenspeicher drahtlos übertragen wird. Halbleiterspeicher dieser Art sind kostengünstig und zudem verhältnismässig klein und überall leicht zu montieren. Für die Energieübertragung ist mit Vorteil ein induktives Wechselfeld vorgesehen.

In der Zeichnung ist ein Ausführungsbeispiel der Erfindung schematisch dargestellt, und zwar zeigen:
- Fig. 1: einen Gesamtplan der automatischen Fertigungsanlage nach der Erfindung; und
- Fig. 2: Einzelheiten einer Fertigungsstation und eines Messplatzes.

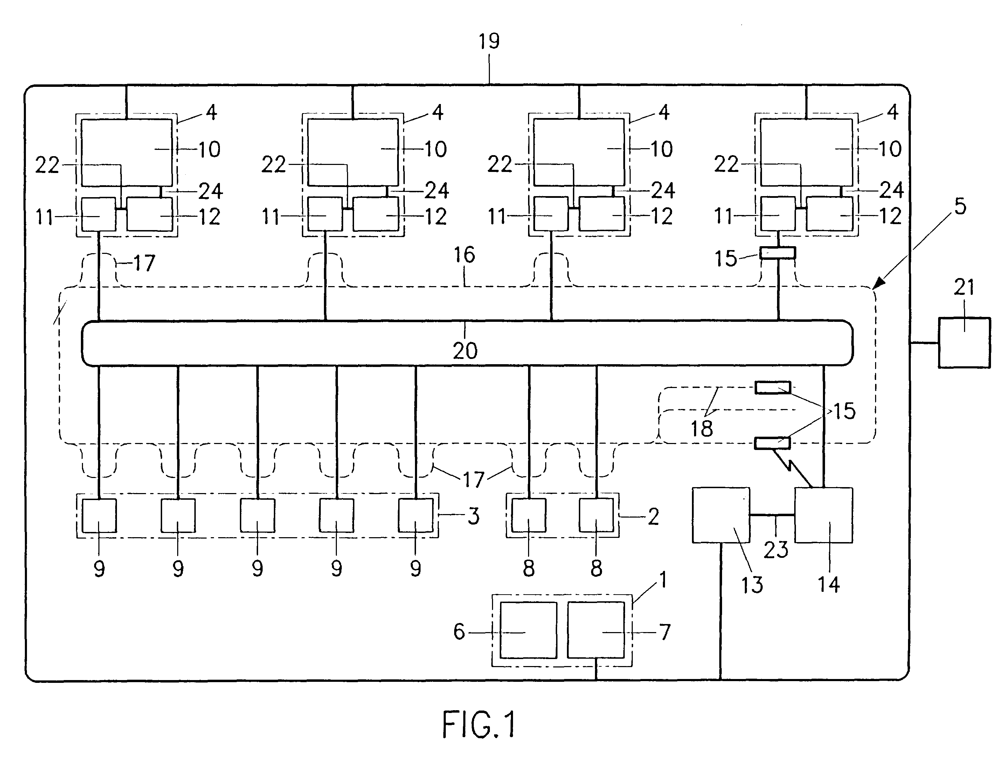

Die in Fig. 1 dargestellte Fertigungsanlage umfasst beispielsweise einen Rüstplatz 1 für die Bestückung der Paletten, eine Umladestation 2 zum Beladen und Entladen transportabler Palettenmagazine, eine Lagerstation 3 für Palettenmagazine, vier Fertigungsstationen 4 und ein Verkehrsnetz 5, welches die verschiedenen Stationen 2, 3 und 4 miteinander verbindet.

Der Rüstplatz 1 enthält einen Aufspannplatz 6, an welchem die Werkstücke und Werkzeuge auf Paletten aufgespannt werden, und einen Messplatz 7 zur Bestimmung der geometrischen Daten der auf den Paletten aufgespannten Werkstücke bzw. Werkzeuge.

An der Umladestation 2, welche zwei Plätze 8 für je ein Palettenmagazin aufweist, werden einerseits ankommende Palettenmagazine mit fertig bearbeiteten Werkstücken entladen und andererseits leere Palettenmagazine mit neu bestückten Paletten beladen.

Die Lagerstation weist eine Mehrzahl von Lagerplätzen auf, im vorliegenden Beispiel fünf Lagerplätze 9 zur vorübergehenden Lagerung von leeren oder belegten Palettenmagazinen.

Jede Fertigungsstation 4 umfasst im vorliegenden Beispiel eine Bearbeitungseinrichtung 10, im allgemeinen in Form einer numerisch gesteuerten Werkzeugmaschine, einen Platz 11 für ein Palettenmagazin, und ein Handhabungsgerät 12 für die Beschickung der Bearbeitungseinrichtung 10 mit Werkstücken und für den Werkzeugaustausch.

Das Verkehrsnetz 5 ist Teil einer automatischen Transporteinrichtung, welche eine zentrale Transportleitstation 13, eine Fernsteueranlage 14 und eine Mehrzahl von ferngesteuerten, wahlweise abrufbaren Fahrzeugen 15 umfasst. Im einzelnen besteht das Verkehrsnetz 5 aus verschiedenen, vorzugsweise schienenlosen Bahnen, längs derer die Fahrzeuge 15 geführt sind, wobei eine in sich geschlossene Bahn 16 an der Umladestation 2, an der Lagerstation 3 und an allen Fertigungsstationen 4 vorbeiführt und zu jedem Magazinplatz 8, 9 bzw. 11 der verschiedenen Stationen 2, 3 und 4 separate Bahnschleifen 17 verlegt sind, so dass mehrere Fahrzeuge gleichzeitig ohne gegenseitige Behinderung auf dem Verkehrsnetz 5 zirkulieren können. Ferner sind Abstellspuren 18 für unbenutzte Fahrzeuge 15 vorgesehen.

Das Informationsflusssystem weist zwei getrennte Datennetze auf, nämlich ein externes Datennetz 19 und ein internes Datennetz 20. Das externe Datennetz 19 verbindet die Steuereinheiten der Bearbeitungseinrichtungen 10 sämtlicher Fertigungsstationen 4 und die Transportleitstation 13 mit einem zentralen Prozessleitrechner 21 und ist für den Austausch von Prozessleitdaten zwischen dem Prozessleitrechner 21 und den Steuereinheiten der Bearbeitungseinrichtungen 10 und für den Austausch von Transportleitdaten zwischen dem Prozessleitrechner 21 und der Transportleitstation 13 vorgesehen. Das externe Datennetz 19 kann Teil eines unter der Bezeichnung "Ethernet" bekannten Datenübertragungssystems sein, an das ausser dem Prozessleitrechner z.B. ein Prozessplanungssystem angeschlossen sein kann.

Demgegenüber verbindet das interne Datennetz 20 die dem Materialflusssystem zugehörigen Anlageteile (Lagerstation 2, Handhabungsgeräte 12 und Fahrzeuge 15) miteinander, und zwar sind sämtliche Magazinplätze 8, 9 und 11 der Umladestation 2, der Lagerstation 3 und der Fertigungsstationen 4 sowie die Fernsteueranlage 14 für den Verkehr der Fahrzeuge 15 über dieses interne Datennetz 20 untereinander verbunden. Für den Datenaustausch zwischen den Magazinplätzen 11 und den Handhabungsgeräten 12 der Fertigungsstationen 4 einerseits und zwischen der Transportleitstation 13 und der Fernsteueranlage 14 andererseits sind Datenverbindungen 22 bzw. 23 vorhanden. Ausserdem ist in jeder Fertigungsstation 4 das Handhabungsgerät 12 mit der Steuereinheit der Bearbeitungseinrichtung 10 über eine einheitliche, durch die Verbindung 24 angedeutete Schnittstelle verbunden, welche Mittel zur Übersetzung des Datenprotokolls des internen Datennetzes 20 auf das Datenprotokoll der mit dem externen Datennetz 19 verbundenen Steuereinheit der betreffenden Bearbeitungseinrichtung 10 enthält.

Dem umzusetzenden Material, d.h. den mit Werkzeugen bzw. Werkstücken bestückten Paletten und den transportablen Palettenmagazinen sind Daten zur Identifierung des Materials, Zieldaten für den Transport des Materials und Daten für den Abruf von Programmen für die Bearbeitung des Materials fest zugeordnet, wobei das interne Datennetz 20 für den Austausch dieser Daten bestimmt ist. Zu diesem Zweck weisen alle Paletten und Palettenmagazine je einen Datenspeicher auf, in denen die betreffenden Daten gespeichert sind, und an allen Aufenthaltsorten der Palettenmagazine und an allen Transferstellen der Paletten sind Datenverarbeitungsgeräte vorhanden, welche mit einem Lesekopf zum Ablesen der gespeicherten Daten ausgerüstet sind. Den Handhabungsgeräten 12 und dem Messplatz 7 sind Datenverarbeitungsgeräte zugeordnet, welche zudem einen Schreibkopf aufweisen, um Daten in die Datenspeicher einzuschreiben, z.B. Daten, welche den Stand der Fertigung angeben.

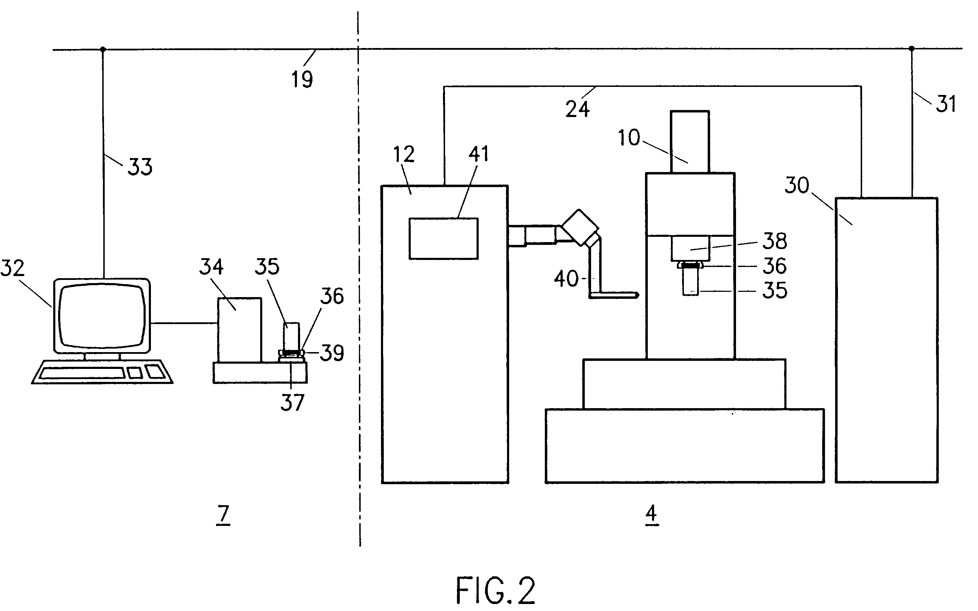

Einzelheiten einer Fertigungsstation 4 (ohne Magazinplatz 11) und des Messplatzes 7 des Rüstplatzes 1 sind in Fig. 2 dargestellt, wobei übereinstimmende Teile mit den gleichen Bezugszeichen versehen sind wie in Fig. 1.

Der Bearbeitungseinrichtung 10 ist eine Steuereinheit 30 zugeordnet, welche über eine Datenleitung 31 mit dem externen Datennetz 19 und über die Datenleitung 24 mit dem Handhabungsgerät 12 verbunden ist und welche einen Datenspeicher aufweist, in welchem eine Mehrzahl verschiedener Bearbeitungsprogramme gespeichert sind.

Der Messplatz 7 umfasst ein Computer-Terminal 32, welches über die Datenleitung 33 mit dem externen Datennetz 19 verbunden ist und an welchen ein Messgerät 34 für die Bestimmung geometrischer Daten angeschlossen ist.

Das Werkstück 35 ist auf einer inbezug auf die Positioniermittel einheitlichen Palette 36 montiert, welche an jeder Stelle, an der sich das Werkstück 35 zum Lagern, Vermessen und Bearbeiten aufhält, z.B. auf einem Untersatz 37 des Messgerätes 34 und am Spannfutter 38 der Bearbeitungseinrichtung 10, positionsgerecht einspannbar ist. Die Palette 36 ist mit einem Datenspeicher 39 versehen, in welchem die zur Identifizierung und die Bearbeitung des Werkstücks 35 erforderlichen Daten gespeichert sind.

Aufgrund eines Bearbeitungsauftrags wird das dafür vorgesehene Werkstück 35 auf eine Palette aufgespannt und dem Messplatz 7 zugeführt, an welchem auch die im Auftrag spezifizierten Daten (wie Werkstückbezeichnung, NC-Programm-Bezeichnung, usw.) übertragen werden. Am Messplatz 7 findet die Voreinstellung des Werkstücks 35 statt. Dabei wird mit Hilfe des Messgerätes 34 die Position des Werkstücks 35 bezüglich seiner Palette 36 bzw. der Versatz desselben gegenüber einem der Palette 36 zugeordneten Bezugssystem festgestellt. Die Messdaten werden zusammen mit den oben genannten Auftragsdaten in dem an der Palette 36 befindlichen Datenträger 39 gespeichert. Damit sind die Messdaten einem bestimmten, identifizierbaren Werkstück fest zugeordnet, und diesbezügliche Verwechslungen sind daher ausgeschlossen. Hierauf wird die bestückte Palette an die Umladestation 2 (Fig. 1) weitergereicht, wo sie in einem Palettenmagazin untergebracht wird. An dieser Stelle wird auch der Datenspeicher des Palettenmagazins mit den erforderlichen Daten geladen, welche für die Identifizierung des Palettenmagazins und den Transport desselben erforderlich sind. Ein Fahrzeug 15 übernimmt das beladene Palettenmagazin und führt dasselbe entweder direkt einer Fertigungsstation 4 oder zwischenzeitlich der Lagereinrichtung 3 zu.

Zu Beginn eines Fertigungsprogramms wird das mit bestückten Paletten beladene Palettenmagazin an den dafür vorgesehenen Aufnahmeplatz einer Fertigungsstation 4 gefahren, an dem es durch den beweglichen Greifarm 40 des Handhabungsgerätes 12 erreichbar ist. Das Handhabungsgerät 12 ist mit einem Datenverarbeitungsgerät 41 ausgerüstet, dessen Lesekopf beispielsweise mit dem beweglichen Greifarm 40 verbunden ist.

In einem Initialisierungslauf fährt der Lesekopf sämtliche Lagerpositionen im Palettenmagazin an und liest die in den Datenspeichern 39 gespeicherten Daten in den Arbeitsspeicher seines Datenverarbeitungsgerätes 41. Die Steuereinheit 30 der Bearbeitungseinrichtung 10 kann nun über die Schnittstelle zum Handhabungsgerät 12 direkt die Bezeichnung des benötigten Werkstücks 35 aufrufen, worauf das Handhabungsgerät 12 das betreffende Werkstück aus dem Palettenmagazin holt und der Bearbeitungseinrichtung 10 zuführt. Das dem Handhabungsgerät 12 zugeordnete Datenverarbeitungsgerät 41 liest mit einem Lesekopf während der Übergabe des Werkstücks 35 die im Datenspeicher 39 gespeicherten Daten und leitet diese an die Steuereinheit 30 weiter, wobei anhand der mitgeführten NC-Programm-Bezeichnung aus den in der Steuereinheit 30 gespeicherten NC-Programmen das für die Bearbeitung des Werkstücks 35 benötigte NC-Programm ausgesucht und zur Steuerung der Bearbeitungseinrichtung 10 eingesetzt wird.

Grundsätzlich in gleicher Weise kann mit den für die Bearbeitung der Werkstücke benötigten Werkzeugen verfahren werden.

Das Werkstück 35, das nach seiner Bearbeitung in der Bearbeitungseinrichtung 10 einer oder mehreren weiteren Bearbeitungseinrichtungen zuzuführen ist, kann zwischenzeitlich magaziniert werden. Das Werkstück 35 kann aber auch zunächst wieder an den Messplatz 7 oder einen anderen Messplatz befördert werden, wo es erneut vermessen wird und die neuen Messdaten in den Datenspeicher 39 an seiner Palette 36 eingelesen werden. Auch in dieser Phase können im Datenspeicher 39 zusätzliche, z.B. die Weiterbearbeitung des Werkstücks 35 betreffende Daten gespeichert werden.

## Patentansprüche

1. Automatische Fertigungsanlage mit mehreren Fertigungsstationen (4) mit mindestens einer Bearbeitungseinrichtung (10), denen je eine Steuereinheit (30) zugeordnet ist, einem Materialflußsystem für innerhalb der Fertigungsanlage umzusetzendes Material (35), wobei das Materialflußsystem eine Lagereinrichtung (3), eine Transporteinrichtung (5, 13, 14, 15) und Handhabungseinrichtungen (12) umfasst, und einem Informationsflußsystem zur Steuerung der Fertigungsanlage, dadurch gekennzeichnet, dass das Informationsflußsystem zwei getrennte Datennetze (19, 20) aufweist, nämlich ein erstes, externes Datennetz (19) für den Austausch von Prozessleitdaten zwischen einem Zentralrechner (21) und den Fertigungsstationen (4) und für den Austausch von Transportleitdaten zwischen dem Zentralrechner (21) und einer Transportleitstation (13), und ein zweites, internes Datennetz (20), welches die Lagereinrichtung (3), die Transporteinrichtung (5, 13, 14, 15) und die Handhabungseinrichtungen (12) miteinander verbindet, dass jede einer Fertigungsstation (4) zugeordnete Steuereinheit (30) einen Datenspeicher für eine Mehrzahl von Bearbeitungsprogrammen enthält, und dass dem umzusetzenden Material (35) Daten zur Identifizierung des Materials, Zieldaten für den Transport des Materials und Daten für den Abruf von in den Steuereinheiten (30) gespeicherten Programmen für die Bearbeitung des Materials fest zugeordnet sind, wobei das interne Datennetz (20) für den Austausch dieser Daten bestimmt ist, und dass das interne Datennetz (20) in den Fertigungsstationen (4) durch einheitliche Schnittstellen (24) mit dem externen Datennetz (19) verbunden ist, wobei an den Schnittstellen Mittel zur Übersetzung unterschiedlicher Datenprotokolle vorhanden sind.

2. Automatische Fertigungsanlage nach Anspruch 1 mit mehreren Fertigungsstationen (4), welche je wenigstens eine numerisch gesteuerte Bearbeitungseinrichtung (10) aufweisen, mit einer Mehrzahl von Paletten für die Bestückung mit Werkstücken (35) und/oder Werkzeugen, einem Rüstplatz (1) für die Bestückung der Paletten, einer Mehrzahl von transportablen Palettenmagazinen zur Ablage der palettierten Werkstücke (35) bzw. Werkzeuge, einer Umladestation (2) zum Beladen und Entladen der Palettenmagazine, einer Lagerstation (3) für die mit Paletten (36) beladenen Palettenmagazine, und einer automatischen Transporteinrichtung (5, 13, 14, 15) für den Transport der beladenen Palettenmagazine auf einem Verkehrsnetz (5), welches die verschiedenen Stationen (2, 3, 4) miteinander verbindet, dadurch gekennzeichnet,
a) dass jede Fertigungsstation (4) ein Handhabungsgerät (12) für den Transfer der Paletten (36) zwischen einem Palettenmagazin und einer Bearbeitungseinrichtung (10) aufweist;
b) dass über das externe Datennetz (19) die Steuereinheiten (30) sämtlicher Bearbeitungseinrichtungen (10) mit einem Prozessleitrechner (21) verbunden sind;
c) dass jede Palette (36) einen Datenspeicher (39) aufweist, in welchem Daten für die Identifizierung des auf der Palette (36) aufgespannten Werkstücks (35) bzw. Werkzeugs, sowie die Bearbeitung des Werkstücks (35) steuernde Daten gespeichert sind;
d) dass jedes Palettenmagazin einen Datenspeicher aufweist, in welchem Daten für die Identifizierung des Palettenmagazins und den Transport desselben steuernde Daten gespeichert sind;
e) dass das interne Datennetz (20) für den Datentransfer zwischen den Datenspeichern (39) der Paletten (36) und Palettenmagazine und den verschiedenen Stationen (2, 3, 4) und der Transporteinrichtung (5, 13, 14, 15) vorgesehen ist; und
f) dass in jeder Fertigungsstation (4) das Handhabungsgerät (12) mit der Steuereinheit (30) der Bearbeitungseinrichtung (10) über jeweils eine einheitliche Schnittstelle (24) verbunden ist, welche Mittel zur Übersetzung des Datenprotokolls des internen Datennetzes (20) auf das Datenprotokoll der mit dem externen Datennetz (19) verbundenen Steuereinheit (30) der betreffenden Bearbeitungseinrichtung (10) enthält.

3. Automatische Fertigungsanlage nach Anspruch 2, dadurch gekennzeichnet, dass Datenspeicher (39) vorgesehen sind, die es ermöglichen, die gespeicherten Daten während des Fabrikationsvorganges zu verändern.

4. Automatische Fertigungsanlage nach einem der vorhergehenden Ansprüche, dadurch gekennzeichnet, dass für das Ein- und Auslesen von Daten in bzw. aus den Datenspeichern (39) ein drahtloses Trägerfrequenzsystem vorgesehen ist.

5. Automatische Fertigungsanlage nach einem der vorhergehenden Ansprüche, dadurch gekennzeichnet, dass Datenspeicher mit energiefreier Speicherung eingesetzt und Einrichtungen vorgesehen sind, mit denen die Energie, welche die Datenspeicher für die Datenübertragung benötigen, vom Datenverarbeitungsgerät auf den jeweils angesteuerten Datenspeicher drahtlos übertragen wird.

6. Automatische Fertigungsanlage nach Anspruch 5, dadurch gekennzeichnet, dass für die Energieübertragung ein induktives Wechselfeld vorgesehen ist.

7. Automatische Fertigungsanlage nach Anspruch 2, dadurch gekennzeichnet, dass die Werkstücke (35) und die Werkzeuge einzeln oder gruppenweise auf Paletten (36) mit einheitlichen Positioniermitteln montiert sind, so dass die Paletten (36) positionsgerecht in die Bearbeitungseinrichtungen (10) einspannbar sind, wobei die Werkstücke (35) auf ihrem Weg durch die Fertigungsanlage bis zur vollständigen Bearbeitung auf den Paletten (36) verbleiben.

8. Automatische Fertigungsanlage nach Anspruch 2, dadurch gekennzeichnet, dass der Rüstplatz (1) mit einem an das externe Datennetz (19) angeschlossenen Messplatz (7) zur Bestimmung geometrischer Daten der auf den Paletten (36) aufgespannten Werkstücke (35) bzw. Werkzeuge und mit einem mit dem Datenspeicher (39) der Paletten (36) zusammenarbeitenden Datenverarbeitungsgerät (32) mit Lese- und Schreibkopf ausgerüstet ist.

9. Automatische Fertigungsanlage nach Anspruch 2, dadurch gekennzeichnet, dass die Transporteinrichtung (5, 13, 14, 15) mehrere, von einer zentralen, mit dem externen Datennetz (19) verbundenen Transportleitstelle (13) aus wahlweise abrufbare Fahrzeuge (15) aufweist.

10. Automatische Fertigungsanlage nach den Ansprüchen 2 und 9, dadurch gekennzeichnet, dass die Fertigungsstationen (4), die Lagereinrichtung (3), die Transportfahrzeuge (15) und die Umladestation (2) einheitliche Aufnahmeplätze (8, 9 bzw. 11) für die Palettenmagazine aufweisen, wobei an diesen Aufnahmeplätzen je ein Datenverarbeitungsgerät mit einem Lesekopf zum Ablesen der in den Datenspeichern der Palettenmagazine gespeicherten Daten vorgesehen ist.

11. Automatische Fertigungsanlage nach Anspruch 2, dadurch gekennzeichnet, dass das jedem Handhabungsgerät (12) zugeordnete Datenverarbeitungsgerät (41) mit einer mit den Datenspeichern (39) der Paletten (36) zusammenarbeitenden Lese- und Schreibeinrichtung verbunden ist und an einer einheitlichen Schnittstelle (24) Mittel zur Übersetzung des Datenprotokolls des internen Datennetzes (20) auf das Datenprotokoll des Steuergeräts (30) der betreffenden Bearbeitungseinrichtung (10) enthält.

## Claims

1. Automatic production plant having a plurality of production stations (4) with at least one processing device (10) which are assigned one control unit (30) each, having a material flow system for material (35) to be displaced, the material flow system comprising a storage device (3), a transport device (5, 13, 14, 15) and handling devices (12), and having an information flow system for controlling the production plant, characterized in that the information flow system has two separate data networks (19, 20) specifically a first, external data network (19) for exchanging process control data between a central computer (21) and the production stations (4) and for exchanging transport control data between the central computer (21) and a transport control station (13), and a second, internal data network (20), which interconnects the storage device (3), the transport device (5, 13, 14, 15) and the handling devices (12), in that each control unit (30) assigned to a production station (4) contains a data memory for a plurality of processing programmes, and in that the material (35) to be displaced is permanently assigned data for identifying the material, target data for transporting the material, and data for retrieving programmes for processing the material which are stored in the control units (30), the internal data network (20) being intended for exchanging these data, and in that the internal data network (20) is connected to the external data network (19) in the production stations (4) by uniform interfaces (24), means being available at the interfaces for converting different data protocols.

2. Automatic production plant according to Claim 1, having a plurality of production stations (4) which have at least one numerically controlled processing device (10) each, having a plurality of pallets for being fitted with workpieces (35) and/or tools, having a pre-paration station (1) for fitting the pallets, a plurality of transportable pallet magazines for depositing the palleted workpieces (35) or tools, a transfer station (2) for loading and unloading the pallet magazines, a storage station (3) for the pallet magazines loaded with pallets (36), and an automatic transport device (5, 13, 14, 15) for transporting the loaded pallet magazines on a traffic network (5), which interconnects the different stations (2, 3, 4) characterized
a) in that each production station (4) has a handling device (12) for transferring the pallets (36) between a pallet magazine and a processing device (10);
b) in that the control units (30) of all the processing devices (10) are connected to a process control computer (21) via the external data network (19);
c) in that each pallet (36) has a data memory (39) in which there are stored data for identifying the workpiece (35) or tool clamped on the pallet (35) and data which control the processing of the workpiece (35);
d) in that each pallet magazine has a data memory in which are stored data for identifying the pallet magazine and data which control the transport of the latter;
e) in that the internal data network (20) is provided for data transfer between the data memories (39) of the pallets (36) and pallet magazines and the different stations (2, 3, 4) and the transport device (5, 13, 14, 15); and
f) in that in each production station (4) the handling device (12) is connected to the control unit (30) of the processing device (10) via in each case one uniform interface (24) which contains means for converting the data protocol of the internal data network (20) to the data protocol of the control unit (30), connected to the external data network (19) of the relevant processing device (10).

3. Automatic production plant according to Claim 2, characterized in that data memories (39) are provided which permit the stored data to change during the production operation.

4. Automatic production plant according to one of the preceding claims, characterized in that a wireless carrier frequency system is provided for reading data into and out of the data memories (39).

5. Automatic production plant according to one of the preceding claims, characterized in that data memories with non-energized storage are used and devices are provided by means of which the energy which the data memories require for data transmission is transmitted in a wireless fashion from the data processing unit to the data memory respectively adressed.

6. Automatic production plant according to Claim 5, characterized in that an inductive alternating field is provided for transmitting energy.

7. Automatic production plant according to Claim 2, characterized in that the workpieces (35) and the tools are mounted individually or in groups on pallets (36) using standard positioning means, with the result that the pallets (36) can be clamped in the correct position into the processing devices (10), the workpieces (35) remaining on the pallets (36) on their way through the production plant until completely processed.

8. Automatic production plant according to Claim 2, characterized in that the preparation station (1) is equipped with a measuring station (7), connected to the external data network (19), for determining geometrical data of the workpieces (35) or tools clamped on the pallets (36), and with a data processing unit (32) cooperating with the data memory (39) of the pallets (36), and equipped with a read-write head.

9. Automatic production plant according to Claim 2, characterized in that the transport device (5, 13, 14, 15) has a plurality of vehicles (15) which can be optionally recalled from a central transport control station (13) connected to the external data network (19).

10. Automatic production plant according to Claims 2 and 9, characterized in that the production stations (4), the storage device (3), the transport vehicles (15) and the transfer station (2) have standard receiving sites (8, 9 and 11) for the pallet magazines, there being provided at each of these receiving sites one data processing unit with a read head for reading the data stored in the data memories of the pallet magazines.

11. Automatic production plant according to Claim 2, characterized in that the data processing unit (41) assigned to each handling unit (12) is connected to a read-write device cooperating with the data memories (39) of the pallets (36), and contains at a uniform interface (24) means for converting the data protocol of the internal data network (20) to the data protocol of the control unit (30) of the relevant processing device (10).

## Revendications

1. Installation de fabrication automatique avec plusieurs stations de fabrication (4) avec au moins un dispositif d'usinage (10), à chacune desquelles est attribuée une unité de commande (30), un système de flux d'information pour du matériel (35) à déplacer au sein de l'installation de fabrication, le système de flux d'information comprenant un dispositif de stockage (3), un dispositif de transport (5, 13, 14, 15) et des dispositifs de manipulation (12), et un système de flux d'information pour la commande de l'installation de fabrication, caractérisée en ce que le système de flux d'information présente deux réseaux de données (19, 20) séparés, à savoir un premier réseau de données (19) externe pour l'échange de données de commande de processus entre un ordinateur central (21) et les stations de fabrication (4) et pour l'échange de données de guidage de transport entre l'ordinateur central (21) et une station de guidage de transport (13), et un deuxième réseau de données (20) interne, qui relie le dispositif de stockage (3), le dispositif de transport (5, 13, 14, 15) et les dispositifs de manipulation (12), en ce que chaque unité de commande (30) attribuée à une station de fabrication (4) contient une mémoire de données pour un certain nombre de programmes d'usinage, et en ce qu'au matériel (35) à déplacer sont attribuées de façon fixe des données pour l'identification du matériel, des données cibles pour le transport du matériel et des données pour l'appel de programmes mémorisés dans les unités de commande (30) pour l'usinage du matériel, le réseau de données (20) interne étant destiné à l'échange de ces données, et en ce que le réseau de données (20) interne est relié par des interfaces (24) uniformes au réseau de données (19) externe dans les stations de fabrication (4), des moyens existant sur les interfaces pour la transmission de différents protocoles de données.

2. Installation de fabrication automatique selon la revendication 1 avec plusieurs stations de fabrication (4), qui présentent chacune au moins un dispositif d'usinage (10) à commande numérique, avec un grand nombre de palettes pour l'alimentation avec des pièces (35) et/ou des outils, un poste de préparation (1) pour l'alimentation des palettes, un certain nombre de magasins à palettes transportables pour le dépôt des pièces (35) ou outils palettisés, une station de transfert (2) pour le chargement et le déchargement des magasins à palettes, une station de stockage (3) pour les magasins à palettes chargés de palettes (36), et un dispositif de transport (5, 13, 14, 15) automatique pour le transport des magasins à palettes chargés sur un réseau de communication (5), qui relie les différentes stations (2, 3, 4) entre elles, caractérisée
a) en ce que chaque station de fabrication (4) présente un appareil de manipulation (12) pour le transfert des palettes (36) entre un magasin à palettes et un dispositif d'usinage (10);
b) en ce que les unités de commande (30) de tous les dispositifs d'usinage (10) sont reliées par le réseau de données (19) externe à un ordinateur de contrôle des processus (21) ;
c) en ce que chaque palette (36) présente une mémoire de données (39), où sont stockées des données pour l'identification de la pièce (35) ou de l'outil monté sur la palette (36) ainsi que des données commandant l'usinage de la pièce (35) ;
d) en ce que chaque magasin à palettes présente une mémoire de données où sont stockées des données pour l'identification du magasin à palettes et des données commandant le transport de celui-ci ;
e) en ce que le réseau de données (20) interne est prévu pour le transfert de données entre les mémoires de données (39) des palettes (36) et magasins à palettes et les différentes stations (2, 3, 4) et le dispositif de transport (5, 13, 14, 15) ; et
f) en ce que, dans chaque station de fabrication (4), l'appareil de manipulation (12) est relié à l'unité de commande (30) du dispositif d'usinage (10) par respectivement une interface (24) homogène, qui contient des moyens pour la transmission du protocole de données du réseau de données (20) interne au protocole de données de l'unité de commande (30), reliée au réseau de données (19) externe, du dispositif d'usinage (10) concerné.

3. Installation de fabrication automatique selon la revendication 2, caractérisée en ce qu'il est prévu des mémoires de données (39) qui permettent de modifier les données mémorisées pendant le cycle de fabrication.

4. Installation de fabrication automatique selon l'une quelconque des revendications précédentes, caractérisée en ce qu'il est prévu un système sans fil à courant porteur pour la mémorisation ou l'extraction des données dans ou hors des mémoires de données (39).

5. Installation de fabrication automatique selon l'une quelconque des revendications précédentes, caractérisée en ce qu'on utilise des mémoires de données avec stockage sans énergie et on prévoit des dispositifs avec lesquels l'énergie, qui est utilisée par les mémoires de données pour la transmission des données, est transmise sans fil par l'appareil de traitement de données à la mémoire de données respectivement amorcée.

6. Installation de fabrication automatique selon la revendication 5, caractérisée en ce qu'il est prévu un champ alternatif inductif pour la transmission de l'énergie.

7. Installation de fabrication automatique selon la revendication 2, caractérisée en ce que les pièces (35) et les outils sont montés individuellement ou par groupes sur des palettes (36) avec des moyens de positionnement homogènes, de sorte que les palettes (36) peuvent être montées avec une position conforme dans les dispositifs d'usinage (10), les pièces (35) restant sur les palettes (36) lors de leur déplacement dans l'installation de fabrication jusqu'à leur usinage complet.

8. Installation de fabrication automatique selon la revendication 2, caractérisée en ce que le poste de préparation (1) est équipé d'un poste de mesure (7) raccordé au réseau de données (19) externe pour déterminer les données géométriques des pièces (35) ou outils montés sur les palettes (36) et d'un appareil de traitement de données (32) travaillant de concert avec la mémoire de données (39) des palettes avec tête de lecture et d'écriture.

9. Installation de fabrication automatique selon la revendication 2, caractérisée en ce que le dispositif de transport (5, 13, 14, 15) présente plusieurs véhicules (15) qui peuvent être appelés à volonté à partir d'un point de guidage de transport (13) central et relié au réseau de données (19) externe.

10. Installation de fabrication automatique selon les revendications 2 et 9, caractérisée en ce que les stations de fabrication (4), le dispositif de stockage (3), les véhicules de transport (15) et la station de transfert (2) présentent des postes de réception (8, 9 et 11) homogènes pour les magasins à palettes, un appareil de traitement de données avec une tête de lecture pour la lecture des données stockées dans les mémoires de données des magasins à palettes étant prévu sur chacun de ces postes de réception.

11. Installation de fabrication automatique selon la revendication 2, caractérisée en ce que l'appareil de traitement de données (41) attribué à chaque appareil de manipulation (12) est relié à un dispositif de lecture et d'écriture travaillant de concert avec les mémoires de données (39) des palettes (36) et, sur une interface (24) homogène, contient des moyens pour la transmission du protocole de données du réseau de données (20) interne au protocole de données de l'appareil de commande (30) du dispositif d'usinage (10) concerné.
